# EUROPEAN PATENT SPECIFICATION

(11) **EP 3 523 622 B1**
(45) Date of publication and mention of the grant of the patent: **30.04.2025**
(21) Application number: 17790902.5
(22) Date of filing: 06.10.2017
(51) Int. Cl.: G01N 1/31, B01L 3/00

(54) **SYSTEM, METHOD AND KIT FOR SAMPLE PREPARATION**
SYSTEM, VERFAHREN UND KIT ZUR PROBENVORBEREITUNG
SYSTÈME, PROCÉDÉ ET KIT DE PRÉPARATION D'ÉCHANTILLON

(30) Priority: 06.10.2016 US 201662405129 P
(43) Date of publication of application: 14.08.2019
(73) Proprietor: Ventana Medical Systems, Inc., Tucson, Arizona 85755 (US)
(72) Inventor: ALKANDRY, Emily S., Rockville, Maryland 20850 (US); DONAT, Christopher Lawrence, Tucson, Arizona 85716 (US); HAZAR, Melis, Tucson, Arizona 85719 (US); KOZIKOWSKI, Raymond T., III, Tucson, Arizona 85718 (US); ROBERTS, Esteban, Tucson, Arizona 85742 (US); SAKR, Mohamed A., Philadelphia, Pennsylvania 19104 (US)
(74) Representative: Altmann Stößel Dick Patentanwälte PartG mbB
(86) International application number: PCT/US2017/055503
(87) International publication number: WO 2018/067910

(56) References cited:
- EP-A1- 1 042 662
- WO-A1-2008/147865
- WO-A2-2013/106458
- US-A- 5 104 813
- US-A- 5 451 500
- US-A1- 2003 175 850
- US-A1- 2015 316 454

## Description

### RELATED APPLICATION DATA

The present disclosure claims the benefit of U.S. Provisional Patent Application No. 62/405,129, filed October 6, 2016.

### FIELD

The disclosure relates to a system and method for preparing substrate mounted biological samples for analysis, more particularly, the disclosure relates to a system and method for immunohistochemical (IHC) staining of cellular samples mounted on microscope slides.

### BACKGROUND

Complex automated systems for consistent preparation of substrate-mounted cellular samples for microscopic analysis are often cost prohibitive for small and resource-poor laboratories. Furthermore, certain settings preclude the use of automation. For example, automated slide staining systems are not typically co-located where patients are cared for due to safety and contamination concerns. Manual procedures for preparing samples, on the other hand, are typically labor intensive and prone to variability if not performed by a skilled technician. As such, samples are routinely transported from the point of patient care to a specialized laboratory for automated or even manual preparation. Transport of samples can lead to a significant delay in receipt of sample test results, particularly in locations where the site of patient care is very remote from any specialized laboratory having the equipment and/or skilled personnel needed to reliably prepare the samples for analysis.

WO2013106458A2 discloses a prior art system.

### SUMMARY

Disclosed is a system and a method for preparing cellular samples (such as tissue and cytological samples) for microscopic analysis that can be utilized by relatively unskilled technicians in any setting.

In one aspect of the present disclosure are systems, kits, and methods that can be used for preparing substrate-mounted cellular samples at or near the point-of-care of a patient, or in laboratories where sample volumes are too low to justify a large investment in automation, or where resources are otherwise limited. In particular embodiments, the disclosed system, kit and method can be used to prepare stained cellular samples for microscopic analysis. In other particular embodiments, the disclosed system, kit and method may help bring the advantages of automation to smaller, low-volume laboratories in a simpler form.

The invention is defined by a system according to claim 1 and the corresponding method according to claim 6.

Claim 7 is directed to a kit comprising a system according to claim 1 and instructions for use of the system to perform the method of claim 6.

### BRIEF DESCRIPTION OF THE DRAWINGS

The features and advantages of the disclosed system and method will become further apparent from the detailed description when read in light of the accompanying drawings, in which:
FIG. 1 shows a schematic of the disclosed system, including some features of particular disclosed embodiments.
FIG. 2 shows a perspective diagram of a particular embodiment of the disclosed system not according to the invention including a porous membrane conveyor feature.
FIG. 3 shows a perspective diagram of a particular embodiment of the disclosed system not according to the invention including a capillary conveyor feature.
FIG. 4 shows an exploded view of a particular embodiment of the disclosed system including a capillary conveyor feature and multiple absorbent pads.
FIG. 5 shows a perspective view of the system of FIG. 4 as assembled for use in preparing a sample for analysis.
FIG. 6 shows an exploded view of another embodiment of the disclosed system including multiple reagent introduction inlets.
FIG. 7 shows a perspective view of a particular embodiment of the disclosed system including top and bottom assemblies that engage with a substrate.
FIG. 8 shows an exploded view of another embodiment of the disclosed system including an adhesive substrate mating assembly portion and pads containing dried reagents.
FIG. 9 shows the embodiment of FIG. 8 in assembled form.
FIG. 10 shows an embodiment of the disclosed system where the introducer assembly, conveyor assembly not according to the invention and the substrate mating assembly are combined in a monolithic assembly.
FIG. 11 illustrates an embodiment of a sample treatment portion of the conveyor having a particular configuration.
FIG. 12 illustrates another embodiment of a sample treatment portion of the conveyor assembly including capillary passages that fluidically couple the sample treatment portion to a collector assembly.
FIG. 13 illustrates yet another embodiment of a sample treatment portion of the conveyor assembly.
FIG. 14 shows an exploded view of yet another embodiment of the disclosed system.
FIG. 15 shows the embodiment of FIG. 14 in assembled form.
FIG. 16 shows an exploded view of a monolithic embodiment of the disclosed system not according to the invention.
FIG. 17 shows the embodiment of FIG. 16 in assembled form.
FIG. 18 shows an exploded view of a modular embodiment of the disclosed system not according to the invention.
FIG. 19 shows the embodiment of FIG. 18 in assembled form.
FIG. 20 shows an exploded view of another modular embodiment of the disclosed system not according to the invention including a clamping assembly.
FIG. 21 shows the embodiment of FIG. 20 in assembled form.
FIG. 22 shows an embodiment of a reagent releaser for sequential delivery of multiple reagents.
FIG. 23 shows a process map for the sample preparation functions that can be performed utilizing certain embodiments of the disclosed system.
FIG. 24 shows a process map of an exemplary immunohistochemical staining procedure that can be performed employing the disclosed system.

### DETAILED DESCRIPTION

It should also be understood that, unless clearly indicated to the contrary, in any methods claimed herein that include more than one step or act, the order of the steps or acts of the method is not necessarily limited to the order in which the steps or acts of the method are recited.

A system for preparing a cellular biological sample for analysis, wherein the cellular biological sample is mounted on a substrate. As used herein, "a cellular biological sample," or simply "sample," comprises any sample that includes prokaryotic and/or eukaryotic cells or significant fragments thereof. Particular examples of cellular biological samples include tissue sections, cytology samples, and microbiological samples.

The disclosed system includes an introducer assembly that is configured to receive at least one fluid used to prepare the cellular biological sample for analysis, such as for microscopic analysis. The system further includes a a conveyor assembly configured to move the at least one fluid across at least a portion of the substrate and bring the at least one fluid in contact with at least a portion of the cellular biological sample. The system further includes a substrate mating assembly configured to hold the substrate against at least a portion of the conveyor assembly.

In particular embodiments of the disclosed system, at least a portion of each of the introducer assembly, the conveyor assembly and the substrate mating assembly are combined in a single, pre-assembled unit. In other particular embodiments, the substrate comprises a microscope slide (such as a standard 1-inch by 3-inch glass or plastic microscope slide).

In other particular embodiments of the disclosed system, the introducer assembly comprises one or more fluid inlets that can be used to introduce liquid reagent directly, or can contain a dried reagent retained within the inlet such that addition of a solvent, such as a buffer, cause the reagent to dissolve in the solvent and be carried through the system. In more particular embodiments, the introducer assembly comprises two or more fluid inlets. In other more particular embodiments, the introducer assembly further comprises indicia that specify the order in the at least one fluid is introduced into the two or more fluid inlets of the introducer assembly, perhaps according to some instructions. For example, the introducer assembly can include a set of numbers or symbols printed hear the two or more inlets that indicate the order in which a solvent is added to each of the inlets in order to perform a sample preparation procedure according to a pre-determined order of steps.

In other embodiments, the system further includes a fluid delivery control unit configured to mate with the one or more fluid inlets of the introducer assembly of the system. For example, the fluid delivery control unit can automatically supply the at least one fluid to the introducer assembly of the system in one or more predetermined amounts at one or more predetermined times into one or more predetermined inlets of the introducer assembly. In other embodiments, the fluid delivery control unit can comprise an interface that directs a user to add one or more fluids in a particular order to one or more inlets. In a more particular semi-automated example, tthe at least one fluid, the one or more predetermined amounts and the one or more predetermined times are encoded in indicia on the system and read by an indicia reader of the fluid delivery control unit, thereby causing the fluid delivery control unit to supply the at least one fluid to the introducer assembly according to the one or more predetermined amounts and at the one or more predetermined times.

In other embodiments, the introducer assembly further includes at least one reagent releaser. Examples of reagent releasers a dried reagent printed on a surface of the introducer assembly, a dissolvable polymer comprising a reagent, a porous membrane pad comprising a reagent, a particle comprising a reagent, and a blister pack comprising a pre-mixed reagent or solvent to dissolve a dried reagent.

In more particular embodiments, the introducer assembly includees at least one valve configured to alter a flow pattern of the at least one fluid through the introducer assembly after a predetermined length of time. Examples of valves that can alter the flow pattern to, for example, deliver a predetermined series of reagents to the cellular biological sample that performs a sample preparation procedure, include dissolvable valves such as those disclosed in Gerbers et al., Lab Chip, 2014, 14, 4042-4049.

In another embodiment of the disclosed system, the conveyor assembly includes a fluid collector assembly. The fluid collector can be, for example, a reservoir or an adsorbent material. The conveyor assembly can include a porous mmembrane and/or a capillary channel that, in some embodiments, forms a sample treatment portion of the conveyor assembly. In further embodiments, the collector assembly comprises a porous material and is configured to draw the at least one fluid from the introducer assembly, through the conveyor assembly and into the collector assembly.

In still other embodiments, the substrate mating assembly comprises an adhesive material attached to a surface of the conveyor assembly. In more particular embodiments of the disclosed system, at least one capillary channel is defined by a combination of the substrate, the adhesive material and the surface of the introducer assembly and or the conveyor assembly. In even more particular embodiment, the system further includes a removable covering over the adhesive material that protects the adhesive material until it is used to join the substrate to the conveyor assembly and/or the introducer assembly.

In order to assist a user in assembly of the system, the conveyor assembly and/or the introducer assembly can include guide portions that assist a user in combining the substrate with the conveyor assembly and/or the introducer assembly to form a system prepared to accept the one or more fluids. For example, the substrate mating assembly can include a backing plate such as a backing plate that includes a holding portion configured to accommodate the substrate and that can be further configured to align the substrate with the conveyor assembly when the backing plate and the conveyor assembly are combined.

In order to help ensure a good seal between the substrate and the system, the substrate mating assembly can further include a clamping assembly configured to apply a force that holds the substrate against the substrate mating assembly. In more particular embodiments, the clamping assembly can be configured to include a fluid deliver unit as discussed above.

Heating and cooling of a cellular biological sample can be aspects of a sample preparation protocol such as a staining protocol. As such the clamping assembly can be configured to include a temperature regulating subsystem. Alternatively, the conveying assembly and/or a backing plate can further include at least one heating and/or cooling element. In more particular embodiments, the clamping assembly can further include electrical connectors or other interconnects to connect or otherwise communicatively couple the at least one heating and/or cooling element in the conveying assembly and/or a backing plate.

In another aspect, a method for preparing a cellular sample for microscopic analysis is disclosed, and, in particular, a method for preparing a cellular sample that is mounted to a microscope slide. The disclosed method comprising includes mating any of the embodiments of the disclosed system with the microscope slide to which the cellular sample is adhered and delivering, through the introducer assembly, a predetermined series of reagents to a sample treatment portion of the conveyor assembly that covers at least a portion of the cellular sample and brings the predetermined series of reagents into contact with the cellular sample. The method further includes removing, successively, the series of reagents from the sample treatment portion into a fluid collector assembly of the conveyor assembly. In a particular embodiment, the predetermined series of reagent comprises a series of reagents to perform a staining protocol on the cellular sample, for example, an immunohistochemical staining protocol. In another particular embodiment, the cellular sample comprises a tissue sample such as a frozen tissue section or a paraffin-embedded tissue section (which has been deparaffinized).

In another aspect, a kit is disclosed that includes an embodiment of the disclosed system and instructions for using the system to perform a particular sample preparation protocol, such as a staining protocol. In particular embodiments, the disclosed kit further includes a microscope slide, such as a microscope slide that is treated (such as with poly-lysine, fibronectin, laminin, collagen or a silanization reagent) to improve adherence of cells to the microscope slide.

### EXAMPLES

The disclosed device can provide staining for rapid turnaround, low cost, low volume applications at the patient point-of-care (POC). Today's POC technology in tissue diagnostics is limited to H&E and it is very manual process where user has large number of touch points. Examples of use cases for the disclosed system, method and kit include POC IHC in the surgical suite for rapid turn-around-time of IHC markers on frozen sections, where they can be used to inform surgical and concomitant treatment decisions on the spot without the burden of brining patient back in the surgical room. Another use case is POC IHC for emerging markets.

Overall, the disclosed device can be configured to be single test kit where the handheld POC device does not require an expensive automation platform but rather it is simple enough for anyone to run the assay using the kit for surgical support or in a low resource/mobile laboratory setting.

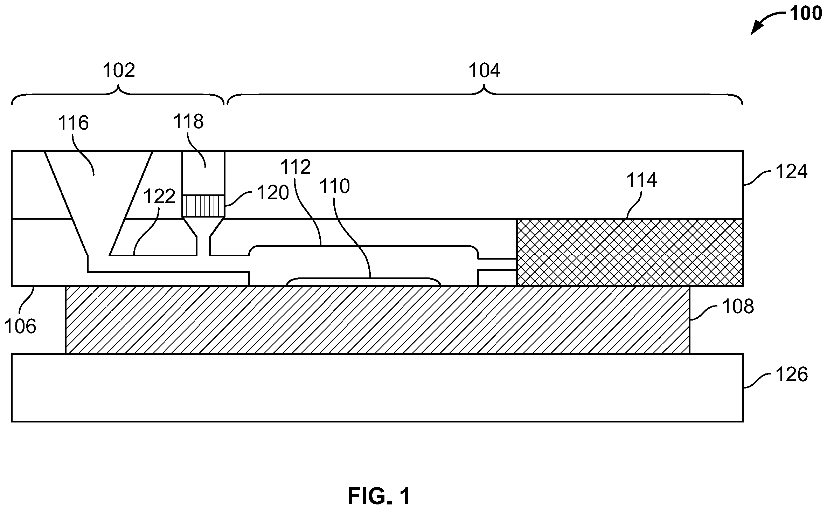

With reference now to FIG. 1, the disclosed system **100** can include an introducer assembly **102,** a conveyor assembly **104** and a substrate mating assembly **106** that mates with substrate **108.** In this embodiment, both the introducer assembly and the conveyor assembly are combined in a single housing **124.** An optional backing plate **126** can be included to hold or otherwise position the substrate **108** in the correct location relative to the housing **124.**

The function of the introducer assembly is to accept sample preparation fluids from user in a single or multiple steps. In some embodiments, the introducer portion includes one or more channels **122.** For example, the introducer assembly can include multiple individual channels stacked in the z direction, one for each fluid, and a user times their delivery. In such an embodiment, each reagent has its own channel so no washing of channels is required between steps.

Alternatively, there can be a single channel for introduction of all the fluids, with washing in between fluid introductions. While such a simple design is cheaper to manufacture, and possibly smaller, washing between reagents typically demands more usage of wash fluid.

Other embodiments for the introducer assembly include multi-channel devices that utilize valves and timing of dissolution of reagents to automatically time the fluid delivery to the sample. For example, channels be placed side-by-side. Alternatively, the user can time the reagents. Yet another possible embodiment is a system that includes a continuous flow interface (such as to an IV line), which is good for wash and buffer solutions as they will be used in higher volumes. While the height difference of the IV line will affect the flow in the tube, this can be mitigated by user training and provision of a stand that is used to keep the height difference constant.

In another embodiment, a user may pipette or otherwise deposit predetermined volumes into an inlet **116** or **118,** which inlet can lead through a passage **122,** such as a capillary passage, into a sample treatment portion **110** of the conveyor assembly **104** where the fluid comes into contact with a cellular biological sample **112.** Also, part of the conveyor assembly **104** can be collector assembly **114,** which might be an absorbent pad that receives fluid from the sample treatment portion **110** and provides a motive force to move fluids from the introducer assembly **102** through the sample treatment portion **110.** In some instance, one or more inlets **118** of the introducer assembly **102** can include a reagent releaser **120** that dissolves when a fluid is added to the inlet. In other embodiments, the reagent releaser can be a blister that a user can burst into the device manually or semiautomatically. Multiple blisters can be incorporated to deliver fluids to device inlets, and such blisters can also be utilized to pre-mix reagents prior to introduction to the device.

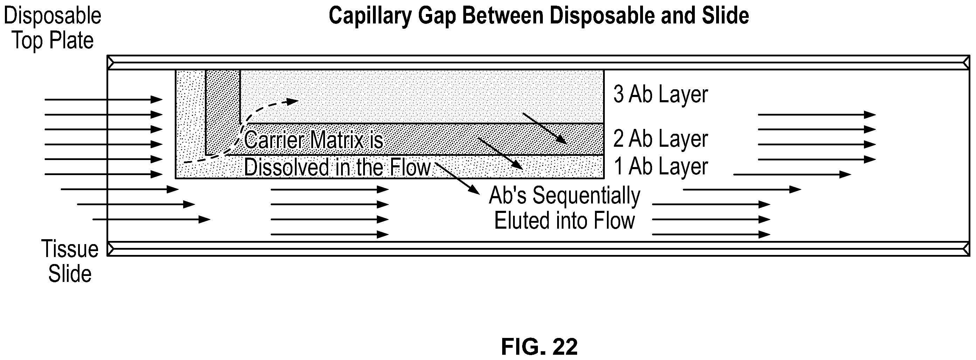

The function of the reagent releaser is to preserve labile biologic reagents over time, and under heat and/or mechanical force. The releaser can hold a desired amount of reagent and allow for control release thereof. Reagents can, for example, be printed onto a surface of the disclosed system using inkjet technologies and dried. Alternatives include dissolvable polymer films that can be packed into the system and can be activated with buffer solution. Conjugate pads, onto which reagents can be dried onto the conjugate pads and then released with a buffer solution or other solvent are other alternatives. Yet another alternative is that reagents are provided in liquid aliquot form and come with the device in a kit and the user introduces them to the device. Still another alternative are particles that have tailored release of reagents. A 3D reagent releaser can be used to provide automated timing of delivery of multiple different reagents as a buffer or other solvent flows through the device (see, for example, FIG. 22 and associated discussion below)

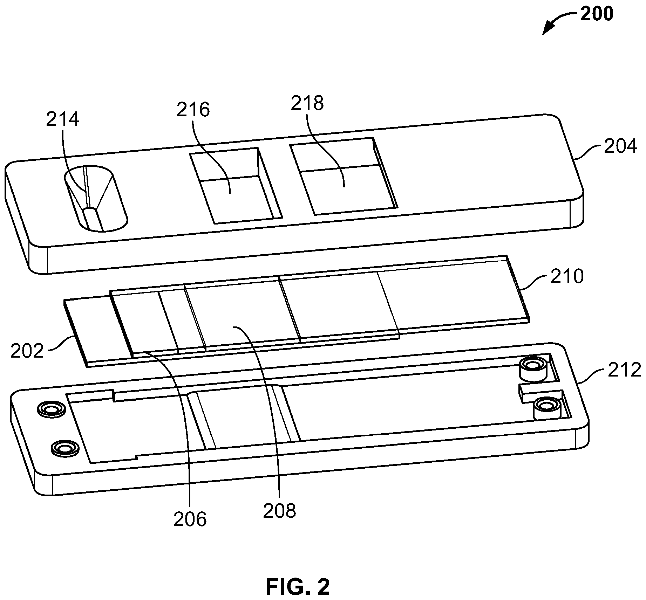

The function of the conveyor assembly is to move fluid through different components of the device including, for example, from introducer assembly to reagent releaser, releaser to sample, and sample to waste. One option to provide this motive force is to include one or more porous membrane portions in the system. A membrane is a passive way of moving fluid. The dry membrane wicks the fluid and wicking moves the fluid to desired location. FIG. 2 illustrates an embodiment of the disclosed system that includes a membrane moving fluids. System **200** of FIG. 2 includes a top housing portion **204,** and bottom housing portion **212.** A substrate **208,** such as a microscope slide, is held in bottom housing portion **212** and when top housing portion **204** is snapped into place, membrane portions **202, 206,** and **210** are brought into contact with substrate **208.** In this embodiment, membrane portion **202** is positioned such that a fluid added to inlet **214** is wicked from membrane portion **202** into membrane portion **206** and across the surface of the substrate **208** where the sample is located to membrane portion **210** that functions as a collector of waste fluids. Such a configuration offers the advantage that bubble formation is kept to a minimum, but there is interaction between the membrane and the sample. Additional inlets or observation windows **216** and **218** can be included in the top portion **204.** Sample treatment reagents and control reagents can be included in the membrane portions.

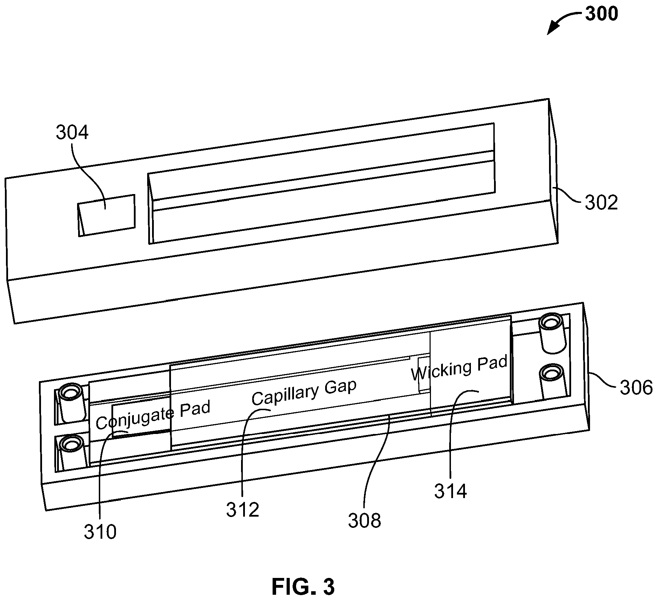

Turning now to FIG. 3, the conveyor assembly can include a capillary gap to move fluid across a sample held on a substrate. In this particular embodiment, system **300** includes a top housing portion **302** and bottom housing portion **306.** In the embodiment of FIG. 3, a substrate such as microscope slide **308** is placed so that the sample bearing side is facing toward the bottom housing portion **306.** Spacers position the substrate above the bottom housing portion to form a capillary gap **312.** Conjugate pad **310** is position in proximity to inlet **304** such that a fluid added to the inlet is dissolved from the conjugate pad and carried through the capillary gap, past the sample, and into wicking pad **314.**

Another possible way to move fluid through the disclosed device is utilizing pressure. This is an active way to move the fluid, more suitable for a semi-automated benchtop version of the disclosed system. Pressure driven flow can, for example, be created with syringe pump. Active motivation of fluids can provide faster flow rates and require less tight tolerances in the device, but electricity may be required. Yet another way to move fluid through the disclosed device is utilizing an electric field, which can also provide faster and more controlled flow rates, and less tight tolerances for manufacturing, but electricity is required. Still another alternative is to utilize gravity, as alluded to above. For example, the system can be provided with a tilt to move the fluid. Finally, a user can dispense fluids directly onto the sample on the substrate. While direct dispense permits the device to be simpler, it does create additional user touch points.

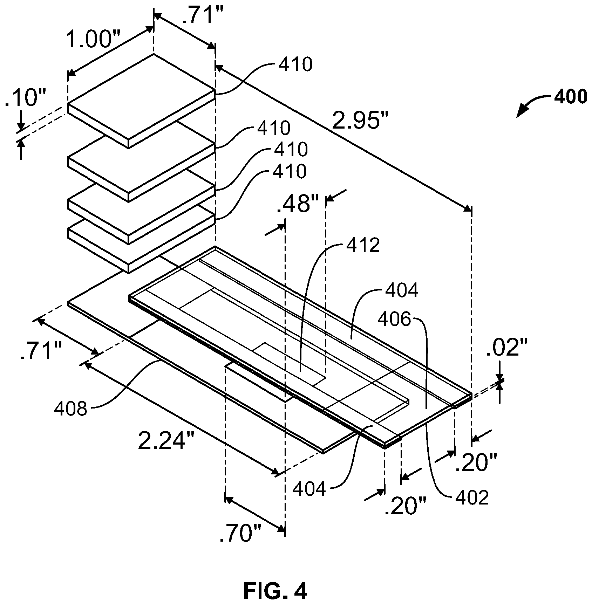

It should be noted that any hybrid combination of these various arrangements to add and move fluids are possible. For example, capillary forces can be used to deliver a fluid to a sample on a substrate, but removed using a wicking force. FIG. 4 illustrates such a configuration. In system **400,** a capillary gap forming member **402** having gap forming spacers **404** (which can be adhesive, such as double sided adhesive) is placed in contact with a substrate **408.** In this embodiment, the spacers form the substrate mating assembly. The capillary gap forming member **402** is configured to extend beyond a first end of the substrate to provide a fluid application portion **406** that represents the introducer assembly. At a second end of the substrate, one or more wicking pads **410** are placed (also perhaps with an adhesive) to receive fluid that passes through the capillary space past sample **412.** Depending upon the waste volume generated during a particular sample preparation protocol, the number of stacked wicking pads can be adjusted to provide enough motive force to flow the fluid at an appropriate rate through the device. In this embodiment, the combination of the capillary space and the wicking pads represents the conveyor assembly, and the wicking pads represent the collector assembly. In use, once the sample treatment protocol is completed, a user can simply remove the capillary gap forming member **402** and the wicking pads **410** and the prepared sample can be examined, such as microscopically.

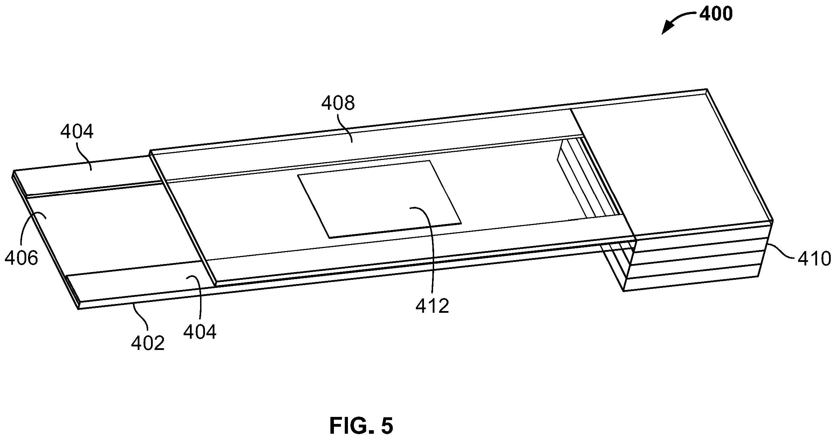

FIG. 5 shows the system of FIG. 4 in an assembled form, wherein like reference numerals indicate like elements.

Options for the collector assembly, which serves to remove and possibly hold waste fluids, include absorbent wicking pads (such as made from cellulose), a hydrogel, a container (such as filled by a vacuum), or simply permit evaporation at an outlet to reduce waste volume.

While the embodiments illustrated in FIGs. 4 and 5 depict no housing, the skilled artisan will appreciate that a housing can be part of the disclosed system. The housing can function to interface with the slide for alignment purposes, for helping create a seal, and it can be made cheaply to permit cost-effective disposal; and it also serves to protect a sample during treatment. In various embodiments, all or part of a housing can be constructed of glass, molded plastic, a 3D printed polymer or co-polymer, polydimethylsiloxane ("PDMS"), and other known materials such as metals, metal alloys, and machined plastics.

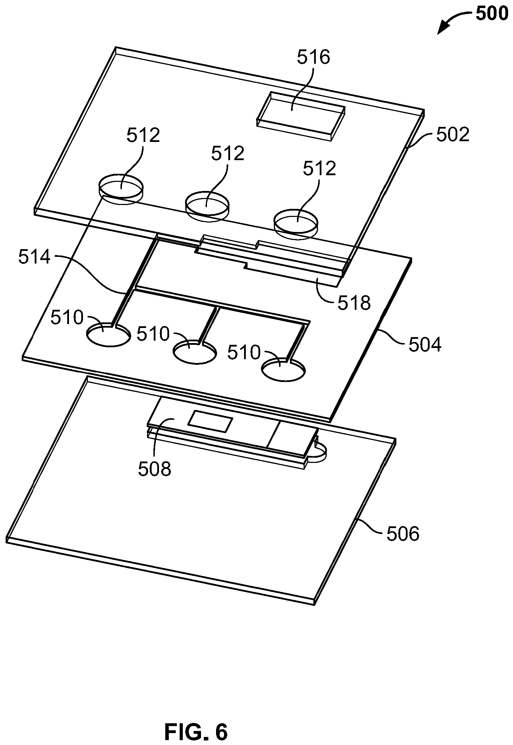

The embodiments of FIGs. 4 and 5 provide one dimensional fluid conveyance through the system, however, such systems are not limited to one dimensional fluid flow. Indeed, as shown in FIG. 6, the disclosed system can include 2-dimensional fluid handling capabilities. In system **500,** a top introducer assembly housing **502** including fluid inlets **512** and wicking pad window **516** is attached to a substrate mating assembly, which in this instance is a piece of double sided tape. The top assembly and the tape can be combined with a wicking pad and provided along with the bottom housing portion **506.** A polymer or paper covering can be left on the lower side of the double-sided tape until a user is ready to assemble and utilize the device. In this instance, a user would place a substrate bearing a sample in a substrate holding portion (not shown) of the bottom housing portion **506,** remove the covering over the lower side of the double-sided tap and place the top introducer assembly housing **502** over the substrate and the bottom housing portion. Capillary channels **514** that are formed between the top and bottom housing portions, and defined by the paths in the tape, are used to convey reagent fluids from inlets **512** to a sample treatment portion of the conveyor assembly (not shown). Waste fluids are further conveyed into and absorbed by a wicking pad placed (or pre-placed) in the wicking pad window.

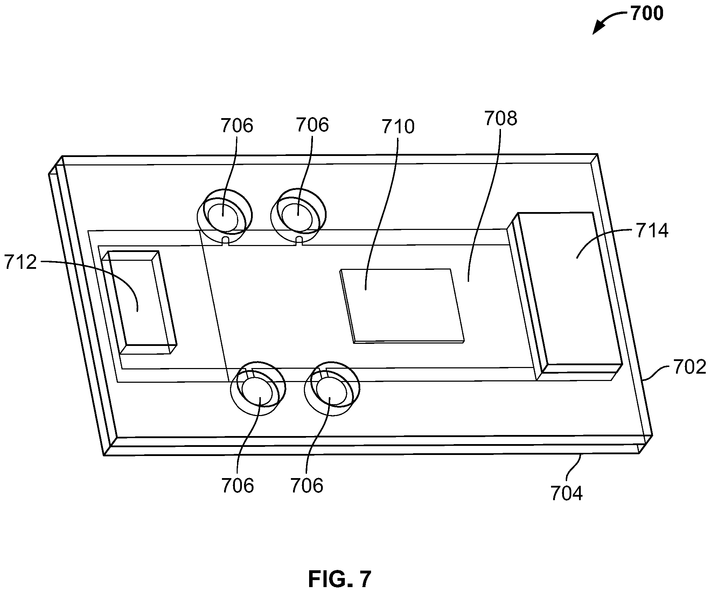

FIG. 7 illustrates another embodiment of the disclosed system including top and bottom housing portions **702** and **704,** where the top housing portion includes biologic reagent inlets **706,** wash fluid inlet **712,** and wicking pad **714.** Fluids introduced into any of the inlets are conveyed through a capillary space over substrate **708** bearing sample **710** to wicking pad **714.**

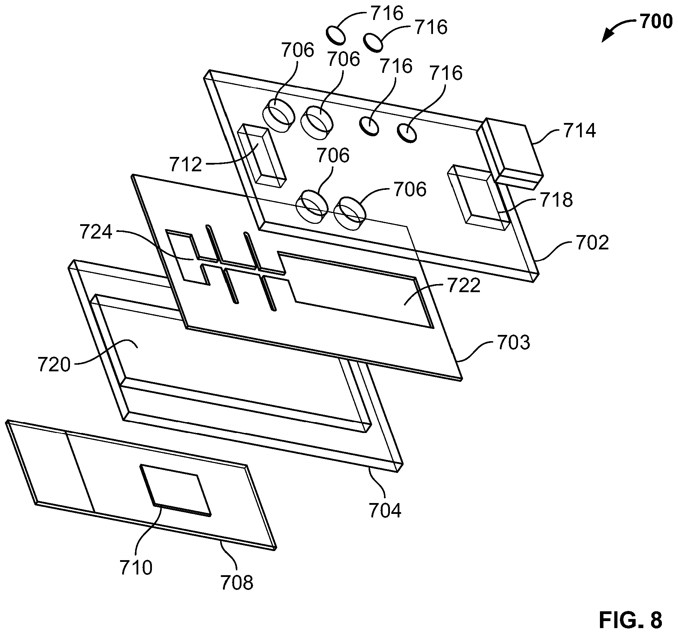

FIG. 8 shows an exploded view of another embodiment of the disclosed system that is similar to that of the embodiment of FIG. 7 except that the inlets **706** are connected to the sample treatment portion **722** of the conveyor assembly by longer capillary channels. Like reference numerals in FIG. 8 as in FIG. 7 correspond to similar elements. What is further shown in FIG. 8 is a substrate holding portion **720** of the bottom housing portion, the double-sided tape **703** that serves as a part of the substrate mating assembly, the cut-out in the top housing assembly that accommodates the wicking pad **714,** the fluidic channels **724** formed in the tape, and reagent releasers **716** that can be present inside of or place by a user inside of biologic reagent inlets **706.**

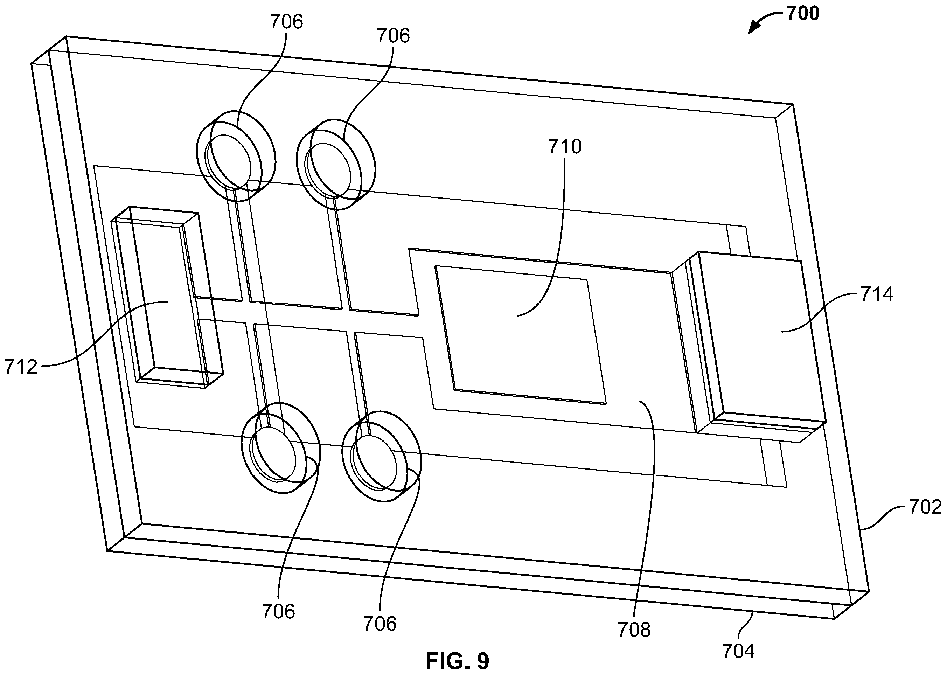

FIG. 9 shows the embodiment of FIG. 8 in assembled form, where again like reference numerals indicate like elements.

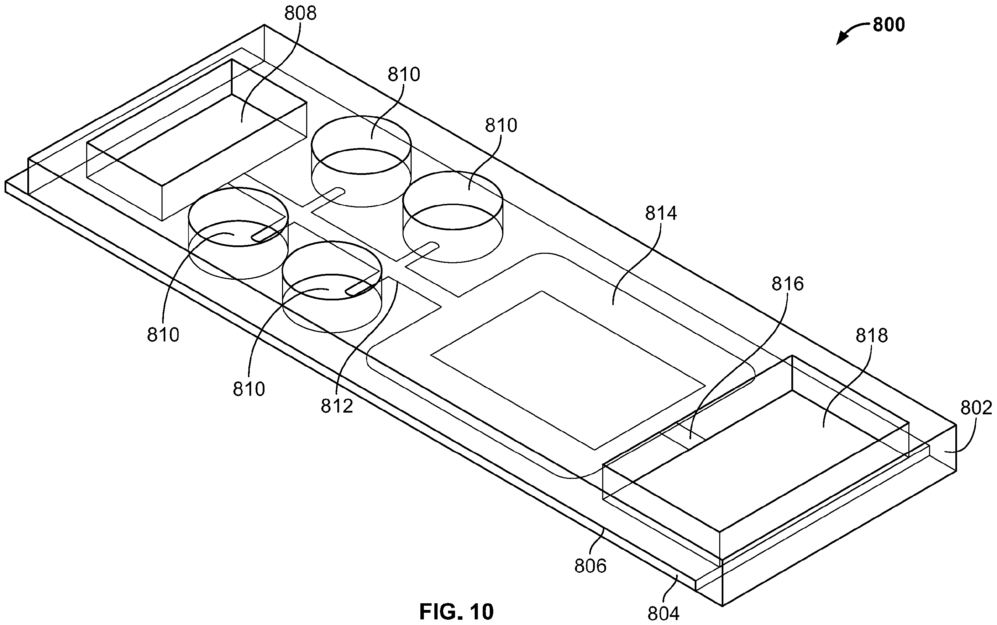

FIG. 10 illustrates an embodiment of the disclosed system **800** where the introducer assembly, the conveyor assembly and the substrate mating assembly are combined into a monolithic piece **802** that can be directly adhered to a substrate **804** with adhesive tape **806** serving as the substrate mating assembly. In this embodiment, fluidic channels **812** and **816** are defined by piece **802,** substrate **804** and cutouts in the tape **806.** The sample treatment portion **814** of the conveyor assembly is fluidically connected to wash inlet **808** and reagent inlets **810** by fluidic channel **812** of the introducer assembly. The sample treatment portion **814** of the conveyor assembly is connected to the collector assembly **818** of the conveyor assembly by fluidic channel **816.**

### Further Examples

A first design did not have capillary channels (see for example, FIG. 7). Addition of capillary channels eliminated gradients, reduced bubble formation, and allowed control over flow rate.

In a second design, several observed system challenges were examined and potential solutions were identified as outlined in Table 1 below:

**Table 1**

| **System Challenges** | **Potential Solutions** |
|---|---|
| **Initial incomplete wetting** | Better wetting cap gap surface (glass on glass) |
| | Wet channel initially with a fluid with favorable properties (small contact angle) |
| | Make sure surfaces are clean |
| **Removing slide at the end** | Less tape contact with the slide |
| | Include release areas on the device that would minimize bending stresses on slide |
| | Use adhesive solvents (xylene, alcohol, 3M adhesive remover...) |
| **Cell Prep overlapping with tape** | Extend cap channel beyond cell prep width (still within slide width) |
| **Background staining** | More extensive washing |
| | Less AB in pads |
| | Less Chromogen |
| **Leaking** | Uniform tape thickness (Single tape piece preferably laser cut) |
| | Applying appropriate pressure when laminating housing and slide surfaces to the tape |
| | Thick tape (50 um is too weak, 100 um is good) |
| **Streaks of reacted 3Ab from its well** | Extend cap channel beyond slide width |
| | Load conj pad with less 3Ab |
| | Flow more buffer through 3Ab conj well |
| **Formation of air bubbles when fluid is depleted from wells** | Constriction at outlet tends to make bubbles form from the outlet side rather than the inlet which then start moving towards the inlet direction (Can be pushed to the wicking pad when next well is loaded). Less problematic than bubbles forming at the inlet |
| **Slide cleanliness** | Extend channel walls beyond the slide width |

In a third design having a smaller footprint (see, for example, FIG. 10), the housing is same size as a slide the slide. Capillary channels were brought closer to fit everything on "slide size". The assembly strategy for the prototype was as follows:
Cut plastic with laser cutter.
Cut tape with laser cutter. Place wet paper towel over tape to prevent burning
Clean cut plastic with alcohol wipe
Use tweezers to place tape layer
Peel backing and adhere clean dry Superfrost Plus slide
Cut wicking pad to size and place

Conclusion: Initial fluid fill inadequate and fluid exchange exhibits streaks.

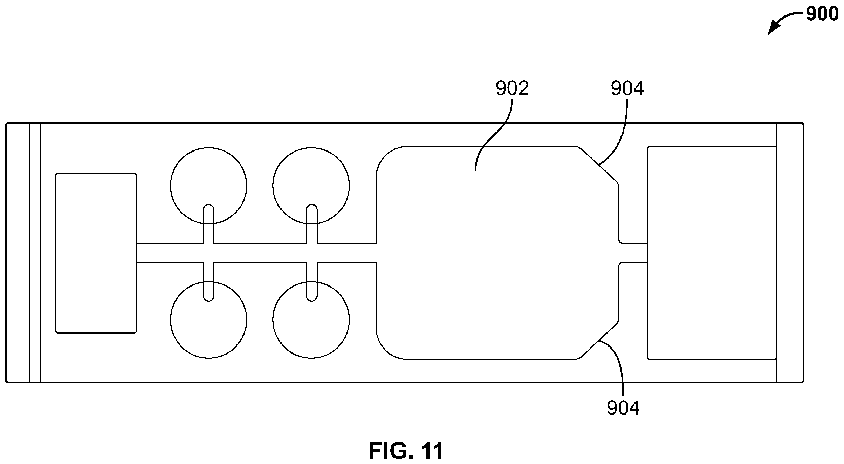

In a fourth design as illustrated in FIG. 11 the geometry of the sample treatment portion **902** of the system **900** was changed to include 45 degree portions **904** near outlet leading to the wicking pad, and the assembly procedure was altered as follows:
Cut plastic (plexiglass) with laser cutter.
Cut tape with laser cutter. Place wet paper towel over tape to prevent burning
Clean cut plastic with alcohol wipe
Use tweezers to place tape layer
Use Surfactant, Reaction Buffer, or abstain from wetting the plexi surface.
Peel backing and adhere clean dry Superfrost Plus slide
Cut wicking pad to size and place

Conclusions: Surfactant wetting of plexiglass improves slide wetting in flow cell. Geometry hinders filling at corners of the outlet

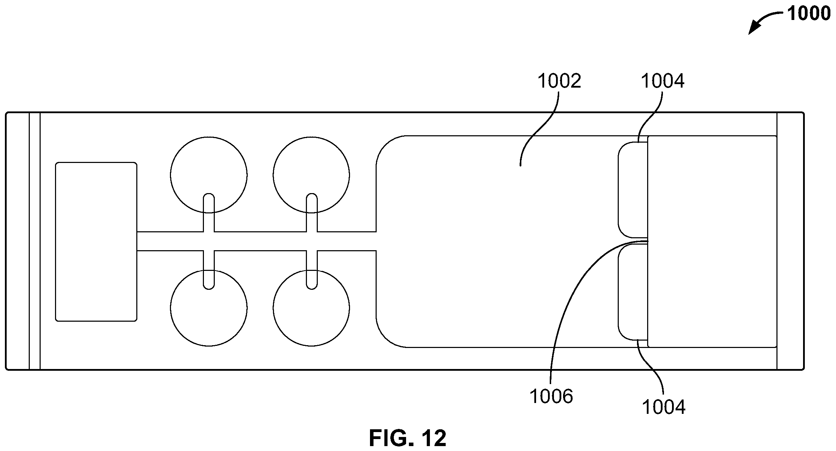

In a fifth design as illustrated in FIG. 12: the geometry of the sample treatment portion **1002** of the system **1000** was changed to include fluid channels at the edges **1004** of the sample treatment portion, and a central fluid channel **1006,** were added to try to alleviate incomplete corner filling. The assembly strategy was as follows:
Cut plastic with laser cutter
Cut tape with laser cutter. Place wet paper towel over tape to prevent burning
Clean cut plastic with alcohol wipe
Use tweezers to place tape layer
Use Surfactant, Reaction Buffer, or abstain from wetting the plexi surface.
Peel backing and adhere clean dry Superfrost Plus slide
Cut wicking pad to size and place

Conclusion: Surfactant Wetting of plexiglass improves slide wetting in flow cell. Geometry aids filling corners and along edges. Fluid exchange biases side of introduction.

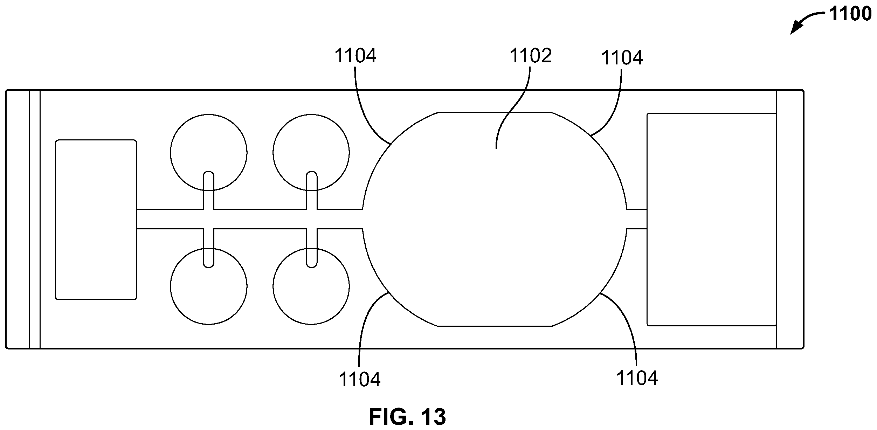

In a sixth design, as shown in FIG. 13, the geometry of the sample treatment portion **1102** of the system **1100** was changed to include larger radius, rounded corners **1104** (such as a radius that is at least 30% of the sample treatment portion's width. The assembly strategy for this prototype was as follows:
Cut plastic with laser cutter
Cut tape with laser cutter. Place wet paper towel over tape to prevent burning
Clean cut plastic with alcohol wipe
Use tweezers to place tape layer
Use Surfactant, Reaction Buffer, or abstain from wetting the plexi surface.
Peel backing and adhere clean dry Superfrost Plus slide
Cut wicking pad to size and place

Conclusions: Surfactant wetting of plexiglass improves slide wetting in flow cell. Geometry aids filling corners and along edges, but still had some filling challenges.

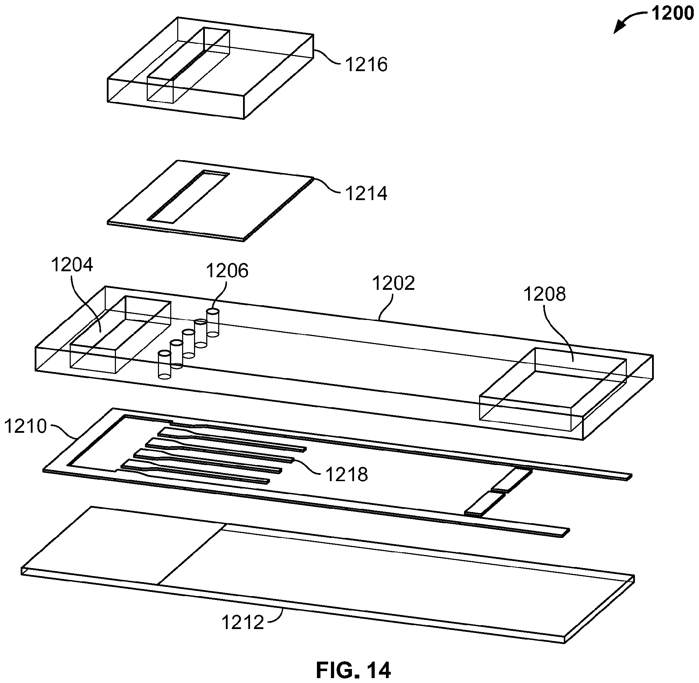

In a seventh design as shown in FIG. 14, the system **1200** included a housing **1202** that included a wash inlet **1204,** a set of multiple reagent inlets **1206,** and a channel (and capillary space) forming adhesive layer **1210** that included multiple parallel channels located correspondingly to the multiple reagent inlets, but also fluidically connected to the wash inlet and the collector assembly **1208.** The adhesive layer which is double-sided and can be pre-assembled to housing **1202** can be protected on its other (lower) surface until a substrate **1212** is adhered to the housing to form the functional system. The system of this embodiment further included a concentrated reagent cap **1216** that could be attached to a top surface of the housing using a second adhesive layer **1214** that includes a passage to fluidically connect the reagent cap **1216** and the reagent inlets **1206.** Because biologic reagents such as antibodies are often heat labile, this design permits subjecting the assembly minus the reagent cap and second adhesive layer to high temperature steps. Furthermore, because the cap can be removed and replaced with a second (or more) cap, in one embodiment, the system can be provided as a kit of the housing assembly with the adhesive layer protected by a covering until attachment to a substrate along with one or more reagent caps that can be, for example, numbered to assist a user in carrying out a predetermined sample treatment protocol. The reagent caps can also be pre-assembled with the second adhesive layer and include a protective covering of one side of the adhesive layer that is removed when the cap is place onto the system. This prototype was assembled and tested as follows:
Cut plastic with laser cutter
Cut tape with laser cutter. Place wet paper towel over tape to prevent burning
Clean cut plastic with alcohol wipe
Use tweezers to place tape layer
Use Reaction buffer to fully wet fluid facing surface of slide.
Allow slide to dry fully.
Use Reaction Buffer to wet the surface of the fluid facing side of the plexi glass.
Peel backing and adhere clean dry Superfrost Plus slide
Cut wicking pad to size and place
Pipette 400uL Dyed Reaction Buffer to wash reservoir and observe
Peel backing from reagent cap and place on flow cell.
Add 200-400uL Reagent to cap

Conclusion: Wash fluid fills completely and rapidly. Fluid exchange with reagent is effective, however, even application over all reagent inlet holes helps minimize reagent concentration gradients. Additional placement features (e.g. dowel pin holes) to help position the reagent cap could assist in properly locating the cap over the reagent inlet holes.

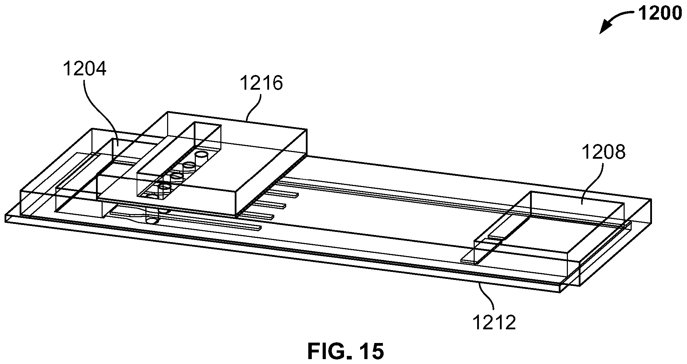

FIG. 15 shows the embodiment of FIG. 14 in assembled form, where like reference numerals correspond to like elements.

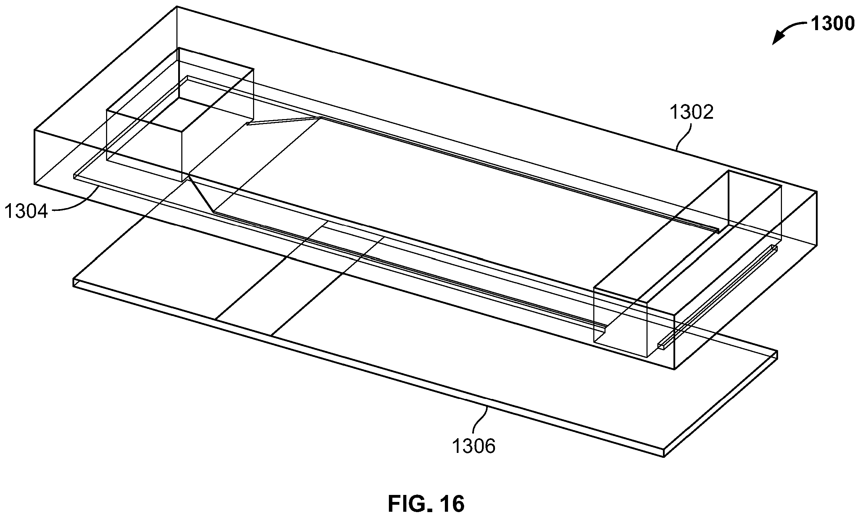

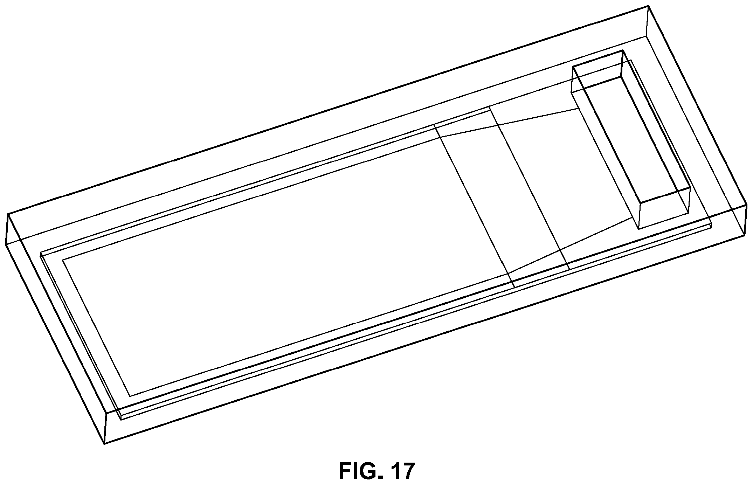

FIG. 16 shows a simple design wherein the system **1300** includes a housing **1302** including a thin step **1304** in the housing that accepts the substrate. A nonreactive grease (like Krytox) can then be used to create a seal between the substrate and the housing. The entire monolithic combination of the introducer assembly, the conveyor assembly and the substrate mating assembly mates right over the slide as shown in FIG. 17, which shows the embodiment of FIG. 16 in assembled form.

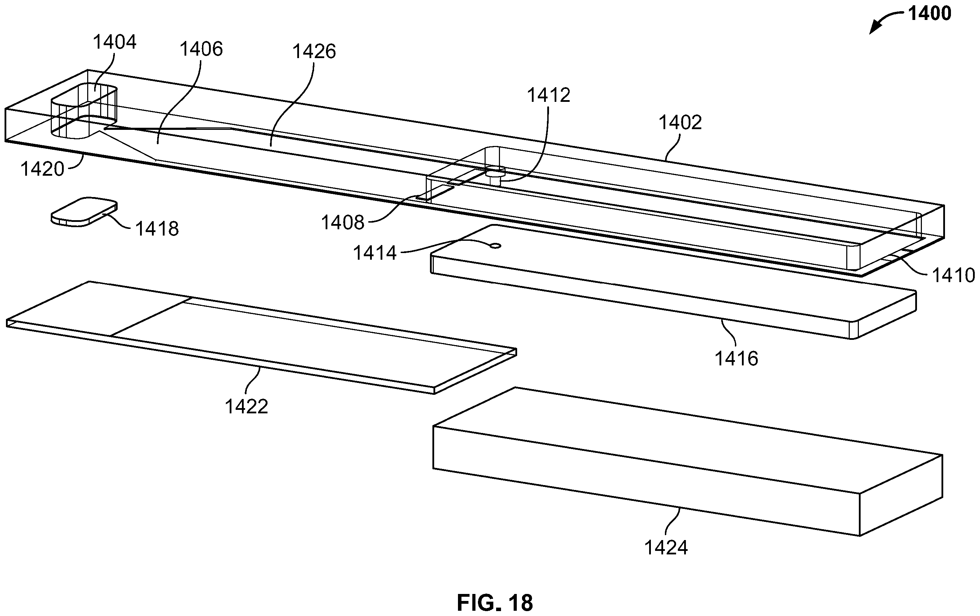

FIG. 18 shows an embodiment of a system **1400** designed to accommodate a larger wicking pad **1416.** In this embodiment, a top housing **1402,** that includes an inlet **1404** that is fluidically coupled to a diffuser section **1406** (see also the embodiment of FIG. 16 for this feature) that may spread the reagent more evenly across the substrate within the sample treatment portion **1426** of the conveyor assembly. A center and edge fluidic pass through **1408** (see also the embodiment of FIG. 12 for this feature) leads to the collector assembly. In this instance, the collector assembly includes a wicking pad **1416** having a hole **1414** that mates to alignment pin **1412.** The collector assembly in this embodiment further includes vent **1410** to permit air to be displaced from the collector assembly. Another additional feature of this embodiment is the porous material **1418** placed inside inlet **1404** to help reduce bubble formation. Again, a double sided adhesive layer (which can be preassembled with the top housing **1402** and protected with a cover until the system is assembled for use) is used to connect the substrate **1422** to the housing. In addition, the adhesive layer is used to connect the top housing to a support block **1424** for the wicking pad.

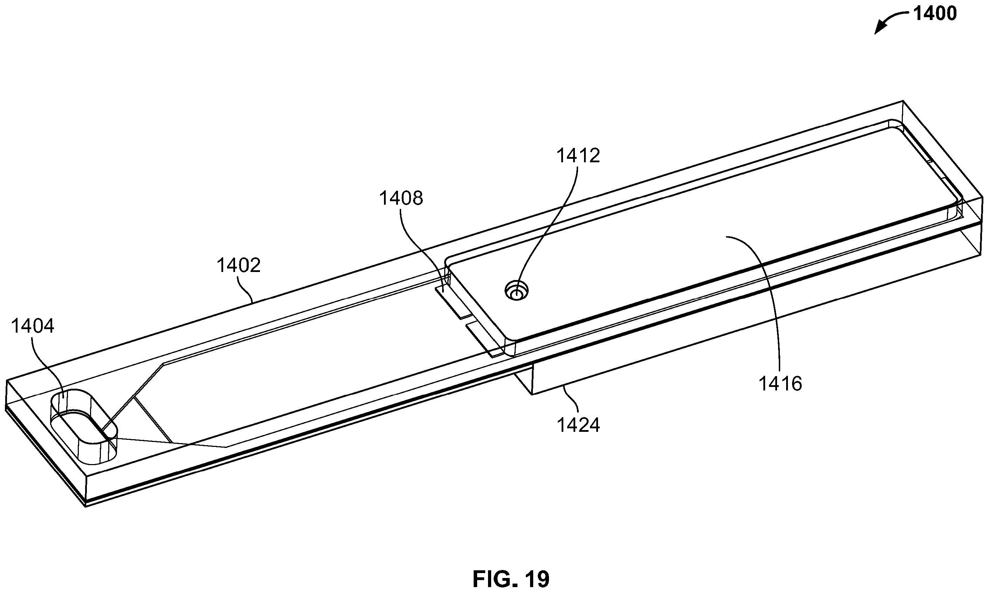

FIG. 19 shows the embodiment of FIG. 18 in assembled form, where like reference numerals correspond to like elements.

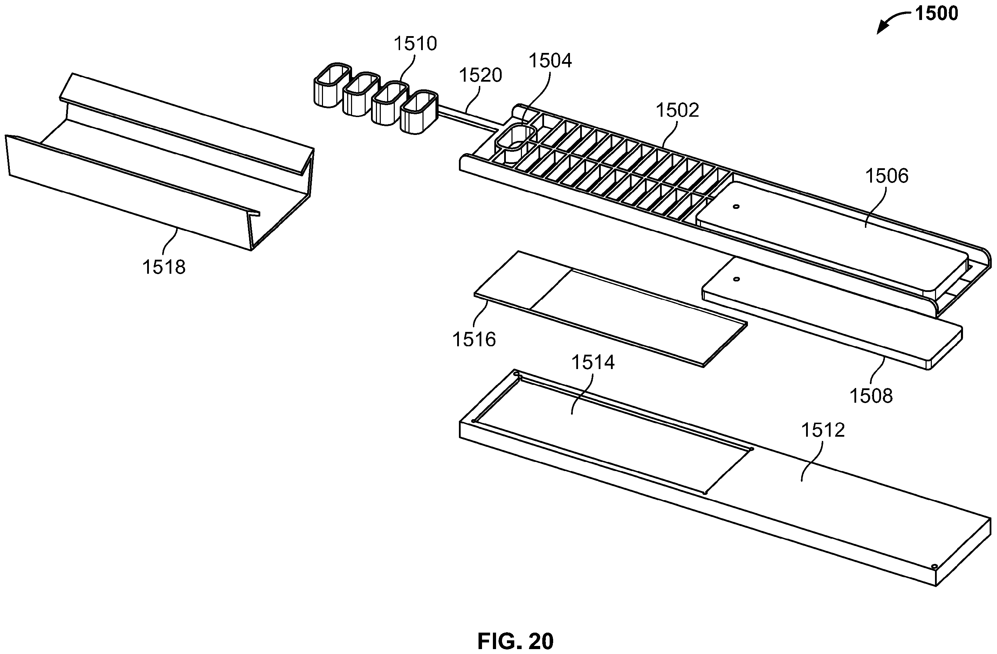

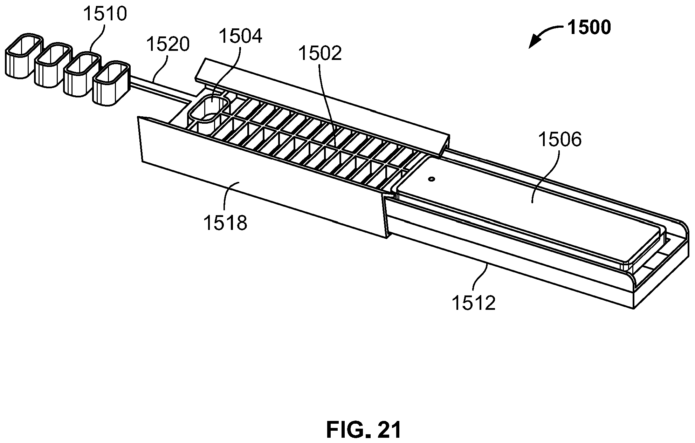

FIG. 20 shows a further embodiment, similar to the embodiment of figure 18, where the system **1500** includes a top housing **1502** (which in this case is injection molded plastic) and the flow channel is impressed into the mold. A "living hinge" **1520** allows pre-packed chemicals**1510** to be moved over the fluid inlet **1504.** The top housing **1502** also includes a recess **1506** to accommodate the wicking pad **1508.** The embodiment further includes a bottom housing **1512** with a recess **1514** configured to accept a substrate **1516,** and the embodiment further includes a clamping assembly **1518** that serves to hold the entire assembly together as shown in FIG. 21, where like reference numerals correspond to like elements. Not shown are locating bumps for proper alignment of the bottom and top housings. There is room in the wicking pad chamber for it to expand, but there is also a locating pin in the chamber to prevent the pad from moving around. There can also be an exit channel past the wicking pad to allow for displaced air. The slide sits slightly proud of top surface of the bottom housing in the recess. A sealing member such as an adhesive layer or grease are optional if the plastic from which the assembly is molded is soft enough. As with other embodiments already discussed, indicia can be added to, for example, each of the pre-packed chemicals so that they are labeled with the numerical order in which they are to be used.

FIG. 22 shows a particular embodiment of a 3-dimensional reagent releaser for releasing multiple reagents in succession. The releaser can be placed within a capillary channel and as, for example, when a buffer is flowed past the releaser, the releaser dissolves to permit the different reagents to reach the cellular biological sample.

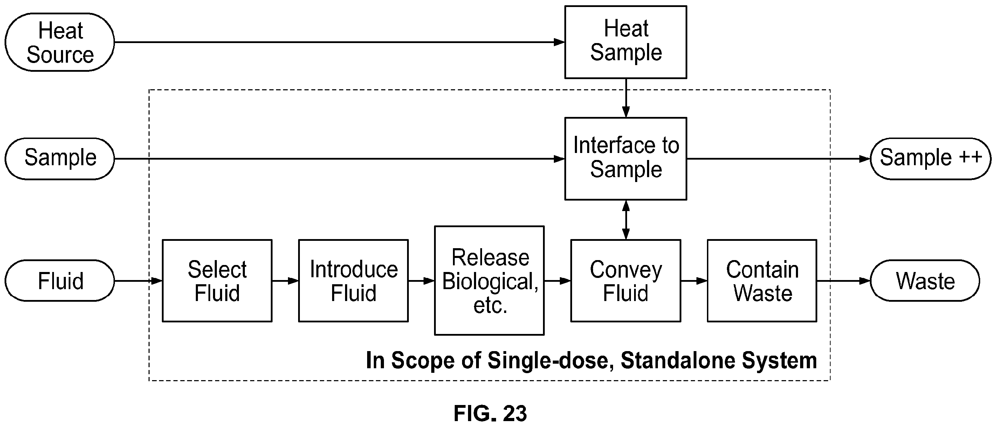

FIG 23 shows a process diagram showing a general workflow for immunohistochemical (IHC) staining process that can be carried out using the disclosed system according to certain embodiments.

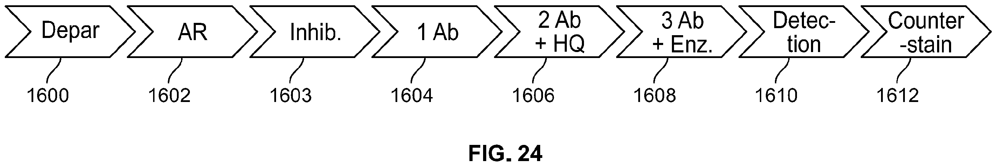

FIG. 24 shows a generalized IHC protocol that can be performed, for example, on a formalin-fixed paraffin-embedded tissue sample. Such a protocol can, at least in part, be performed using the disclosed system according to certain embodiments. At step **1600,** the sample is de-paraffinized, a step that may be performed separately before mounting a substrate bearing the tissue sample to the disclosed system. At step **1602,** antigen retrieval, which is typically accomplished with head and/or pressure, can be performed using the disclosed system in an embodiment as discussed further below. At step **1603,** an inhibitor may be added to help prevent non-specific binding of the primary antibody added in step **1604.** If the primary antibody is directly detectable (such as by fluorescence microscopy) steps **1606** and **1608** are optional. If not, these next two steps can be used for signal amplification prior to detection at step **1610.** Typically, a counterstain is added to enhance contrast between an IHC detected antigen at step **1612.** IHC staining can be used to detect particular antigens (such as biomarkers for disease) in a cellular sample, to detect viral particles and to detect certain pathogenic bacteria.

### Integration of heating to a POC IHC device

It is generally accepted that some IHC assays will require a "hot step" to facilitate binding of antibody to antigen or to create optimal reaction conditions for enzymatic detection steps as part of an assay detection stack. In autostainers, this is typically done as a function of the instrument (e.g. a heater plate for the slide, temperature control of the overall instrument, or a temperature controlled staining fluid). For manual staining processes these steps may be performed on a hot plate or in an incubation chamber.

When compared to methods performed manually, the POC device described here may be used in a similar manner, but with some unique attributes. For example, the POC device housing provides an evaporative barrier. When a slide without coverage is placed on a hotplate, there is a large surface area for evaporation of the fluid on the slide. However, when the POC device is placed on the slide, and then placed on a hotplate, the exposed surface area of fluid is greatly reduced.

In addition, the POC device in some embodiments may be compatible with incubation chambers. In either the configuration where the reagents are stored in a second piece of the cartridge assembly or the reagents are packaged as lyophilized solids on the POC device, an incubation chamber may be used. In this configuration, an antigen retrieval fluid is applied via the introduction port on the POC device to wet out the slide and tissue within the capillary gap space. At that point, the entire assembly (Slide + Fluid + POC device) may be placed in the incubation chamber. The advantage is that due to the coverage provided by the device, evaporation rates can be lower than uncovered slides. In addition, since the device has a reservoir to hold additional fluid the device may replenish fluid on the slide and tissue automatically during hot incubation. Finally, this device does not preclude the use in a pressurized incubation chamber.

Another way that heating may be incorporated into the POC device is via the integration of a thin-film heater into the device. During manufacturing of the top plate of the device, a coating of a conductive thin film may be applied. Examples include but are not limited to indium tin oxide (ITO), SiOiCr, Nichorme (NiCr), or Tantalum Nitride (TaN).

Compatible materials (substrate) for the POC device may include acrylics, polycarbonates, glass, polyether ether ketone ("PEEK"), cyclic olefin copolymer ("COC"), and PDMS. Methods of manufacture include direct ion beam sputter coating (particularly for a glass substrate), lamination, or the addition of an epoxy to the POC device surface. For surface treatment, the heater may be built up on the POC device surface while for other methods, the heater is fabricated separately and then bonded to the surface of the POC device facing the fluid, tissue, and microscope slide.

Patterns include continuous thin film surface, grid patterning of metal or metal oxide, or a wound wire pattern on the surface. The differences include the ability to deliver a high-power density for patterned wire heaters and the ability to create heating gradients with a thin film layer depending upon the placement of bus bars. In this device, a thermal gradient may be used to enhance mixing as molecular diffusion will be increased across the temperature gradient as well as bulk transport phenomenon to alleviate the temperature gradient.

Insulation of the heater may be achieved by the application of another thin film layer (SiO2 for example) or the lamination of a non-conductive polymer layer such as polyethylene terephthalate ("PET") or Kapton^{®} (a polyimide film available from Dupont).

Bus bars to be included may be sputtered metal, a wraparound conductive metal contact to the other (non-fluid facing) side of the POC top plate, or copper (conductive tape) or conductive epoxy (e.g. the conductive epoxy may be a standard epoxy filled with an electrically conductive material, such as metal elements (for example gold and silver), metalloids, or other material such as carbon, which by filling the standard epoxy results in a conductive epoxy). Suitable conductive epoxies include, without limitation, commercially available silver epoxies, nickel epoxies, chromium epoxies, gold epoxies, tungsten epoxies, alloy epoxies and combinations thereof. In some embodiments, the conductive epoxies are selected from Tra-Duct^{®} 2902 silver epoxy (available from Tra-Con, Inc.) and Applied Technologies 5933 alloy (70/25/5 weight percent Ag/Au/Ni) epoxy (available from Applied Technologies). In other embodiments, the conductive epoxy is an EPOXIES 40-3905 (an electrically conductive epoxy adhesive and coating designed for applications requiring low temperature cures) or an EPOXIES 40-3900 (an electrically conductive epoxy resin filled with pure silver), both available from EPOXIES, Cranston, RI. In another embodiment, the conductive epoxy is AGCL-823, a silver /silver chloride electrically conductive epoxy, available from Conductive Compounds, Hudson, J.

Relevant operating temperatures for the device may be up to about 120C for sustained periods of time, with a maximum power density up to about10W/in2. Control of heating may be via direct modulation of the DC voltage applied to the heater, or through the use of a pulse width modulation scheme at a fixed DC voltage to be applied. Power may be delivered to the device by connecting a supply to the bus bars or other contact surfaces built off of the bus bars.

Application of mild heating extends the capability and flexibility of the device. For example, for some assays, a mild antigen retrieval step is recommended (about 80C for about 15min). This act of unmasking antigens may improve the overall sensitivity of the test result provided when using the POC of the device. In the case of some tissue-based assays, it is required to do some amount of antigen retrieval prior to IHC in order to linearize the epitopes for binding. Without the ability to apply heat, that sub-set of IHC assays would not be compatible with this device.

Various modifications of the invention, in addition to those described herein, will be apparent to those skilled in the art from the foregoing description. Such modifications are also intended to fall within the scope of the appended claims. For example, as seen in the various specific embodiments illustrated herein, elements of the introducer assembly, the conveyor assembly and the substrate mating assembly can be mixed and matched in one or more modules that are used to assemble the system for use in preparing a substrate mounted cellular biological sample.

As used herein, "a" and "the" are meant to include both the singular and plural referents. Thus, for example, reference to "a dispenser" or "the dispenser" includes one or one or more dispensers. As used herein, the term "about" refers to plus or minus 10% of the referenced number's value, for example plus or minus 5% of the referenced number's value such as plus or minus 1% of the referenced number's value.

Reference numbers, if recited in the claims, are exemplary and for ease of review by the patent office only, and are not limiting in any way. In some embodiments, the figures presented in this patent application are drawn to scale, including the angles, ratios of dimensions, etc. In some embodiments, the figures are representative only and the claims are not limited by the dimensions of the figures. As used herein, the "comprising" is an open-ended term and is used interchangeably with the term "including." Thus, for example, a description of a system comprising (including) features A and B also covers a system comprising (including) features A, B and C. In some embodiments, descriptions of the invention described herein using the phrase "comprising" includes embodiments that could be described as "consisting of", and as such the written description requirement for claiming one or more embodiments of the present invention using the phrase "consisting of" is met.

As used herein, the terms "stain," "staining," or the like as used herein generally refers to any treatment of a biological specimen that detects and/or differentiates the presence, location, and/or amount (such as concentration) of a particular molecule (such as a lipid, protein or nucleic acid) or particular structure (such as a normal or malignant cell, cytosol, nucleus, Golgi apparatus, or cytoskeleton) in the biological specimen. For example, staining can provide contrast between a particular molecule or a particular cellular structure and surrounding portions of a biological specimen, and the intensity of the staining can provide a measure of the amount of a particular molecule in the specimen. Staining can be used to aid in the viewing of molecules, cellular structures and organisms not only with bright-field microscopes, but also with other viewing tools, such as phase contrast microscopes, electron microscopes, and fluorescence microscopes. Some staining performed by the system 2 can be used to visualize an outline of a cell. Other staining performed by the system 2 may rely on certain cell components (such as molecules or structures) being stained without or with relatively little staining other cell components. Examples of types of staining methods performed by the system 2 include, without limitation, histochemical methods, immunohistochemical methods, and other methods based on reactions between molecules (including non-covalent binding interactions), such as hybridization reactions between nucleic acid molecules. Particular staining methods include, but are not limited to, primary staining methods (e.g., H&E staining, Pap staining, etc.), enzyme-linked immunohistochemical methods, and in situ RNA and DNA hybridization methods, such as fluorescence in situ hybridization (FISH).

### REFERENCE

Gerbers et al., Lab Chip, 2014, 14, 4042-4049

## Claims

1. A system (100, 200, 300, 400, 500, 800, 900, 1000, 1100, 1200, 1300, 1400, 1500) for preparing a cellular biological sample for analysis, wherein the cellular biological sample is mounted on a substrate (108, 208, 308, 408, 708, 804, 1212, 1422, 1516), comprising:
a. an introducer assembly (102) including two or more inlets (116 or 118) configured to receive at least one fluid used to prepare the cellular biological sample for analysis and indicia that specify the order in the at least one fluid is introduced into the two or more fluid inlets of the introducer assembly;
b. a conveyor assembly (104) configured to move the at least one fluid across at least a portion of the substrate (108, 208, 308, 408, 708, 804, 1212, 1422, 1516), wherein the conveyor assembly includes (i) a treatment portion (110) where the at least one fluid comes into contact with at least a portion of the cellular biological sample, ; (ii) a capillary passage fluidically coupled to the one or more inlets and the treatment potion (110); and (iii) a fluid collector assembly in fluidic communication with the treatment portion (110), the fluid collector assembly including an absorbent pad that receives fluid from the sample treatment portion (110) and provides a motive force to move fluids from the one or more inlets (116 or 118) of the introducer assembly (102) through the sample treatment portion (110); and,
a substrate mating assembly (106) configured to hold the substrate (108, 208, 308, 408, 708, 804, 1212, 1422, 1516) against at least a portion of the conveyor assembly (104).

2. The system of claim 1, , wherein the substrate comprises a microscope slide (308).

3. The system of any of claims 1 to 2, further comprising a fluid delivery control unit configured to mate with the two or more fluid inlets (512, 712, 1504) of the introducer assembly (102).

4. The system of any of claims 1 to 3, wherein the introducer assembly (102) further comprises at least one reagent releaser, wherein the at least one reagent releaser (120, 716) comprises one or more of a dried reagent printed on a surface of the introducer assembly (102), a dissolvable polymer comprising a reagent, a porous membrane pad comprising a reagent, a particle comprising a reagent, and a blister pack.

5. The system of any of claims 1 to 4, wherein the substrate mating assembly (106) further comprises a backing plate (126) that includes a holding portion being configured to align the substrate (108, 208, 408, 708, 804, 1212, 1422, 1516) with the conveyor assembly (104) when the backing plate (126) and the conveyor assembly (104) are combined.

6. A method for preparing a cellular sample for microscopic analysis, wherein the cellular sample is mounted to a microscope slide (308), comprising:
a. mating a system (100, 200, 300, 400, 500, 800, 900, 1000, 1100, 1200, 1300, 1400, 1500) of any of claims 1 to 5 with the microscope slide (308);
b. delivering, through the two or more inlets (116 or 118) of the introducer assembly (102), a predetermined series of reagents to a sample treatment portion of the conveyor assembly (104) that covers at least a portion of the cellular sample and brings the predetermined series of reagents into contact with the cellular sample; and,
c. removing, successively, the series of reagents from the sample treatment portion into a collector assembly (114, 818, 1208) of the conveyor assembly (104).

7. A kit, comprising:
a. a system (100, 200, 300, 400, 500, 800, 900, 1000, 1100, 1200, 1300, 1400, 1500) according to any of claims 1 to 5; and
b. instructions for use of the system (100, 200, 300, 400, 500, 800, 900, 1000, 1100, 1200, 1300, 1400, 1500) to perform the method of claim 6.

8. The kit of claim 7, further comprising a microscope slide (308), wherein the microscope slide (308) is treated to improve adherence of cells to the microscope slide (308).

## Patentansprüche

1. System (100, 200, 300, 400, 500, 800, 900, 1000, 1100, 1200, 1300, 1400, 1500) zum Vorbereiten einer zellulären biologischen Probe zur Analyse, wobei die zelluläre biologische Probe auf einem Substrat (108, 208, 308, 408, 708, 804, 1212, 1422, 1516) aufgezogen ist, umfassend:
a. eine Einleiteinrichtung (102), die zwei oder mehr Einlässe (116 oder 118), die dafür ausgebildet sind, mindestens eine Flüssigkeit aufzunehmen, die zum Vorbereiten der zellulären biologischen Probe zur Analyse verwendet wird, und Indikatoren, die die Reihenfolge spezifizieren, in der die mindestens eine Flüssigkeit in die zwei oder mehr Flüssigkeitseinlässe der Einleiteinrichtung eingeleitet wird, einschließt;
b. eine Fördereinrichtung (104), die dafür ausgebildet ist, die mindestens eine Flüssigkeit über mindestens einen Teil des Substrats (108, 208, 308, 408, 708, 804, 1212, 1422, 1516) zu bewegen, wobei die Fördereinrichtung (i) einen Behandlungsteil (110), in dem die mindestens eine Flüssigkeit mit mindestens einem Teil der zellulären biologischen Probe in Kontakt kommt; (ii) einen Kapillardurchlauf, der fluidisch an den einen Einlass oder die mehreren Einlässe und den Behandlungsteil (110) gekoppelt ist; und (iii) eine Flüssigkeitsauffangeinrichtung in Fluidkommunikation mit dem Behandlungsteil (110) einschließt, wobei die Flüssigkeitsauffangeinrichtung ein Saugkissen einschließt, das Flüssigkeit aus dem Probenbehandlungsteil (110) aufnimmt und eine Antriebskraft zum Bewegen von Flüssigkeiten aus dem einen Einlass oder den mehreren Einlässen (116 oder 118) der Einleiteinrichtung (102) durch den Probenbehandlungsteil (110) bereitstellt; und
eine Substratverbindungseinrichtung (106), die dafür ausgebildet ist, das Substrat (108, 208, 308, 408, 708, 804, 1212, 1422, 1516) gegen mindestens einen Teil der Fördereinrichtung (104) zu halten.

2. System nach Anspruch 1, wobei das Substrat einen Mikroskopobjektträger (308) umfasst.

3. System nach einem der Ansprüche 1 bis 2, ferner umfassend eine Flüssigkeitsabgabesteuerungseinheit, die dafür ausgebildet ist, sich mit den zwei oder mehr Flüssigkeitseinlässen (512, 712, 1504) der Einleiteinrichtung (102) zu verbinden.

4. System nach einem der Ansprüche 1 bis 3, wobei die Einleiteinrichtung (102) ferner mindestens einen Reagenzfreisetzer umfasst, wobei der mindestens eine Reagenzfreisetzer (120, 716) eines oder mehreres von einem getrockneten Reagenz, das auf eine Oberfläche der Einleiteinrichtung (102) gedruckt ist, einem lösbaren Polymer, das ein Reagenz umfasst, einem porösen Membrankissen, das ein Reagenz umfasst, einem Partikel, das ein Reagenz umfasst, und einer Blisterpackung umfasst.

5. System nach einem der Ansprüche 1 bis 4, wobei die Substratverbindungseinrichtung (106) ferner eine Rückenplatte (126) umfasst, die einen Halteteil einschließt, der dafür ausgebildet ist, das Substrat (108, 208, 408, 708, 804, 1212, 1422, 1516) nach der Fördereinrichtung (104) auszurichten, wenn die Rückenplatte (126) und die Fördereinrichtung (104) vereinigt sind.

6. Verfahren zum Vorbereiten einer zellulären Probe zur mikroskopischen Analyse, wobei die zelluläre Probe auf einem Mikroskopobjektträger (308) aufgezogen wird, umfassend:
a. Verbinden eines Systems (100, 200, 300, 400, 500, 800, 900, 1000, 1100, 1200, 1300, 1400, 1500) nach einem der Ansprüche 1 bis 5 mit dem Mikroskopobjektträger (308);
b. Abgeben einer vorbestimmten Reihe von Reagenzien an einen Probenbehandlungsteil der Fördereinrichtung (104), der mindestens einen Teil der zellulären Probe bedeckt und die vorbestimmte Reihe von Reagenzien mit der zellulären Probe in Kontakt bringt, über die zwei oder mehr Einlässe (116 oder 118) der Einleiteinrichtung (102) und
c. sukzessives Entfernen der Reihe von Reagenzien aus dem Probenbehandlungsteil in eine Auffangeinrichtung (114, 818, 1208) der Fördereinrichtung (104).

7. Kit, umfassend:
a. ein System (100, 200, 300, 400, 500, 800, 900, 1000, 1100, 1200, 1300, 1400, 1500) nach einem der Ansprüche 1 bis 5 und
b. Anweisungen zur Verwendung des Systems (100, 200, 300, 400, 500, 800, 900, 1000, 1100, 1200, 1300, 1400, 1500) zum Ausführen des Verfahrens nach Anspruch 6.

8. Kit nach Anspruch 7, ferner umfassend einen Mikroskopobjektträger (308), wobei der Mikroskopobjektträger (308) behandelt ist, um das Anhaften von Zellen an dem Mikroskopobjektträger (308) zu verbessern.

## Revendications

1. Système (100, 200, 300, 400, 500, 800, 900, 1000, 1100, 1200, 1300, 1400, 1500) pour la préparation d'un échantillon biologique cellulaire pour l'analyse, dans lequel l'échantillon biologique cellulaire est monté sur un substrat (108, 208, 308, 408, 708, 804, 1212, 1422, 1516), comprenant :
a. un ensemble introducteur (102) comprenant deux entrées (116 ou 118) ou plus conçu pour recevoir au moins un fluide utilisé pour préparer l'échantillon biologique cellulaire pour analyse et des indices qui précisent l'ordre dans lequel l'au moins un fluide est introduit dans les deux entrées de fluide ou plus de l'ensemble introducteur ;
b. un ensemble convoyeur (104) conçu pour déplacer l'au moins un fluide à travers au moins une partie du substrat (108, 208, 308, 408, 708, 804, 1212, 1422, 1516), l'ensemble convoyeur comprenant (i) une partie de traitement (110) où l'au moins un fluide entre en contact avec au moins une partie de l'échantillon biologique cellulaire ; (ii) un passage capillaire couplé fluidiquement à la ou aux entrées et à la partie de traitement (110) ; et (iii) un ensemble collecteur de fluide en communication fluidique avec la partie de traitement (110), l'ensemble collecteur de fluide comprenant un tampon absorbant qui reçoit du fluide provenant de la partie de traitement (110) d'échantillon et fournit une force motrice pour déplacer des fluides provenant de la ou des entrées (116 ou 118) de l'ensemble introducteur (102) à travers la partie de traitement (110) d'échantillon ; et
un ensemble accouplement de substrat (106) conçu pour maintenir le substrat (108, 208, 308, 408, 708, 804, 1212, 1422, 1516) contre au moins une partie de l'ensemble convoyeur (104).

2. Système selon la revendication 1, dans lequel le substrat comprend une lame de microscope (308).

3. Système selon l'une quelconque des revendications 1 à 2, comprenant en outre une unité de régulation de délivrance de fluide conçue pour s'accoupler avec les deux entrées (512, 712, 1504) de fluide ou plus de l'ensemble introducteur (102).

4. Système selon l'une quelconque des revendications 1 à 3, dans lequel l'ensemble introducteur (102) comprend en outre au moins un libérateur de réactif, dans lequel l'au moins un libérateur de réactif (120, 716) comprend un ou plusieurs éléments parmi un réactif séché imprimé sur une surface de l'ensemble introducteur (102), un polymère soluble comprenant un réactif, un tampon de membrane poreuse comprenant un réactif, une particule comprenant un réactif et une plaquette alvéolée.

5. Système selon l'une quelconque des revendications 1 à 4, dans lequel l'ensemble d'accouplement de substrat (106) comprend en outre une plaque de support (126) qui comprend une partie de maintien conçue pour aligner le substrat (108, 208, 408, 708, 804, 1212, 1422, 1516) avec l'ensemble convoyeur (104) lorsque la plaque de support (126) et l'ensemble convoyeur (104) sont combinés.

6. Procédé de préparation d'un échantillon cellulaire pour une analyse microscopique, dans lequel l'échantillon cellulaire est monté sur une lame de microscope (308), comprenant :
a. l'accouplement d'un système (100, 200, 300, 400, 500, 800, 900, 1000, 1100, 1200, 1300, 1400, 1500) selon l'une quelconque des revendications 1 à 5 avec la lame de microscope (308) ;
b. la délivrance, à travers les deux entrées (116 ou 118) ou plus de l'ensemble introducteur (102), d'une série prédéterminée de réactifs à une partie de traitement d'échantillon de l'ensemble convoyeur (104) qui couvre au moins une partie de l'échantillon cellulaire et amène la série prédéterminée de réactifs au contact de l'échantillon cellulaire ; et
c. le retrait, de manière successive, de la série de réactifs de la partie de traitement d'échantillon dans un ensemble collecteur (114, 818, 1208) de l'ensemble convoyeur (104).

7. Kit comprenant :
a. un système (100, 200, 300, 400, 500, 800, 900, 1000, 1100, 1200, 1300, 1400, 1500) selon l'une quelconque des revendications 1 à 5 ; et
b. des instructions d'utilisation du système (100, 200, 300, 400, 500, 800, 900, 1000, 1100, 1200, 1300, 1400, 1500) pour réaliser le procédé selon la revendication 6.

8. Kit selon la revendication 7, comprenant en outre une lame de microscope (308), dans lequel la lame de microscope (308) est traitée pour améliorer l'adhérence des cellules à la lame de microscope (308).
